# EUROPÄISCHE PATENTSCHRIFT

(11) **EP 3 505 698 B1**
(45) Veröffentlichungstag und Bekanntmachung des Hinweises auf die Patenterteilung: **30.09.2020**
(21) Anmeldenummer: 18213070.8
(22) Anmeldetag: 17.12.2018
(51) Int. Cl.: E04C 3/06, E04C 3/14, H02G 3/04, E04D 3/08

(54) **SPARRENHALTER, ÜBERDACHUNGSVORRICHTUNG UND VERFAHREN ZUR HERSTELLUNG EINES SPARRENHALTERS**
RAFTER HOLDER, COVERING DEVICE AND METHOD FOR PRODUCING A RAFTER HOLDER
SUPPORT DE CHEVRON, DISPOSITIF DE TOITURE ET PROCÉDÉ DE FABRICATION D'UN SUPPORT DE CHEVRON

(30) Priorität: 29.12.2017 DE 102017223871; 29.12.2017 DE 202017006663 U
(43) Veröffentlichungstag der Anmeldung: 03.07.2019
(73) Patentinhaber: Kneer, Ingo, 88521 Ertingen (DE)
(72) Erfinder: Kneer, Ingo, 88521 Ertingen (DE)
(74) Vertreter: Isarpatent

(56) Entgegenhaltungen:
- DE-U1- 29 920 615
- DE-U1-202016 005 196

## Beschreibung

### GEBIET DER ERFINDUNG

Die vorliegende Erfindung betrifft einen Sparrenhalter, eine Überdachungsvorrichtung mit einem derartigen Sparrenhalter sowie ein Verfahren zur Herstellung eines derartigen Sparrenhalters.

### TECHNISCHER HINTERGRUND

Überdachungen werden für unterschiedlichste Anwendungen eingesetzt. Eine häufig anzutreffende Art von Überdachungen stellen sogenannte Terrassenüberdachungen dar.

Obwohl die vorliegende Erfindung und die ihr zugrunde liegende Problematik im Folgenden anhand einer Terrassenüberdachung beschrieben werden, sind sie darauf nicht begrenzt sondern auf vielfältige Arten von Überdachung übertragbar. Terrassenüberdachungen weisen oftmals ein als Wandanschlussprofil ausgebildetes Längsträgerprofil auf, welches mit Befestigungsmitteln, beispielsweise Bolzen, an einer Wand verankert wird. Aufgrund baulicher oder lokaler Gegebenheiten kann eine Montagehöhe eines derartigen Wandanschlussprofils variieren. An einer von der Wand abgewandten Seite wird die Terrassenüberdachung in der Regel mit einer von Pfosten abgestützten Pfette gelagert. Bei all diesen Komponenten handelt es sich in der Regel um vorgefertigte Teile, welche in Normgrößen vorproduziert werden. Es ist somit wünschenswert, bei der Montage einen Anstellwinkel der Sparren, welcher sich aus der Montagehöhe des Wandanschlussprofils und der Höhe der Pfosten ergibt, variieren zu können, um auf einfache Weise auf bauliche oder örtliche Gegebenheiten reagieren zu können.

Bei einer Variierbarkeit des Anstellwinkels der Sparren ergibt sich auch die Notwendigkeit der Variierbarkeit des Anstellwinkels der Dachpaneele oder Ausfachungen, welche üblicherweise an den Sparren gelagert sind.

Der Anmelder hat hierzu eine in der DE 20 2016 005 196 U1 beschriebene Lösung aufgefunden, welche am Längsträgerprofil einer Überdachungsvorrichtung in Längsrichtung lokal begrenzt einen Einführabschnitt vorsieht, an welchem ein zur Aufnahme eines Sparrenhalters ausgebildeter Lagerprofilabschnitt derart ausgenommen ist, dass er zur Montage in einen Umgreifabschnitt des Sparrenhalters einführbar ist. Auf diese Weise lässt sich ein Formschluss zwischen Längsträgerprofil und Sparrenhalter durch Längsverschiebung herstellen.

Bei Terrassenüberdachungen besteht oftmals der Wunsch nach einer eleganten Beleuchtung des überdachten Bereichs. In der Regel werden dazu bisweilen Leuchtmittel, wie Leuchtstoffröhren oder LED-Streifen, an der Unterseite der Sparren befestigt. Anschlusskabel werden dazu zumeist von Hand entlang der Profile Des Längsträgerprofils und des Sparrens verlegt. Dies ist zum einen bei der Montage aufwendig und zum anderen können, insbesondere falls bei der Montage der Terrassenüberdachung Kabel in den Profilen verlegt werden, Kabel durch die zur Montage nötigen Relativbewegungen des Sparrens zum Längsträgerprofil beschädigt werden.

### ZUSAMMENFASSUNG DER ERFINDUNG

Vor diesem Hintergrund liegt der vorliegenden Erfindung die Aufgabe zugrunde, einen verbesserten Sparrenhalter für eine Überdachungsvorrichtung sowie eine verbesserte Überdachungsvorrichtung und ein Verfahren zur Herstellung des verbesserten Sparrenhalters anzugeben.

Erfindungsgemäß wird diese Aufgabe durch einen Sparrenhalter mit den Merkmalen des Patentanspruchs 1 und/oder durch eine Überdachungsvorrichtung mit den Merkmalen des Patentanspruchs 8 und/oder durch ein Verfahren mit den Merkmalen des Patentanspruches 11 gelöst.

Demgemäß ist vorgesehen:
- Ein Sparrenhalter für eine Überdachungsvorrichtung, insbesondere für eine Terrassenüberdachung, mit einer Lagerseite, welche zur Lagerung des Sparrenhalters an einem Längsträgerprofil ausgebildet ist, einer Befestigungsseite, welche zur Befestigung eines Sparrens an dem Sparrenhalter ausgebildet ist, durch einen elektrischen T-Verbinder gekennzeichnet, welcher zur elektrischen Verbindung der Lagerseite mit der Befestigungsseite ausgebildet ist, wobei sich zwei T-Arme des T-Verbinders entlang der Lagerseite erstrecken und sich ein T-Fuß des T-Verbinders von der Lagerseite zu der Befestigungsseite erstreckt, wobei der T-Verbinder in eine von der Lagerseite zu der Befestigungsseite reichende Durchgangsbohrung eingesetzt ist.
- Eine Überdachungsvorrichtung, insbesondere Terrassenüberdachung, mit: einem Längsträgerprofil, welches zur Lagerung eines Sparrenhalters ausgebildet ist und einen Lagerprofilabschnitt aufweist; und einem erfindungsgemäßen Sparrenhalter, wobei das Längsträgerprofil in Längsrichtung lokal begrenzt einen Einführabschnitt aufweist, an welchem der Lagerprofilabschnitt derart ausgenommen ist, dass er zur Montage an der Lagerseite des Sparrenhalters, insbesondere in einen Umgreifabschnitt, einführbar ist, und wobei die Lagerseite an dem Lagerprofilabschnitt längsverschieblich ausgebildet ist und durch Längsverschiebung ein Formschluss zwischen dem Sparrenhalter und dem Lagerprofilabschnitt herstellbar ist.
- Ein Verfahren zur Herstellung eines erfindungsgemäßen Sparrenhalters, wobei ein elektrischer T-Verbinder in eine Ausnehmung im Sparrenhalter eingesetzt wird, welche von einer zur Lagerung des Sparrenhalters an einem Längsträgerprofil ausgebildeten Lagerseite zu einer zur Befestigung eines Sparrens an dem Sparrenhalter ausgebildeten Befestigungsseite reicht.

Die der vorliegenden Erfindung zugrunde liegende Erkenntnis besteht darin, dass eine Kabelführung zur Energieversorgung einer Beleuchtungseinrichtung nicht nur entlang der Profile einer Überdachungsvorrichtung, sondern auch in den Sparrenhalter integrierbar bzw. in dem Sparrenhalter vorbereitbar ist.

Die der vorliegenden Erfindung zugrunde liegende Idee besteht nun darin, einen elektrischen T-Verbinder in dem Sparrenhalter integriert vorzusehen, welcher sich von einer zur Lagerung des Sparrenhalters an einem Längsträgerprofil ausgebildeten Lagerseite zu einer zur Befestigung eines Sparrens an dem Sparrenhalter ausgebildeten Befestigungsseite erstreckt.

Unter einem elektrischen T-Verbinder ist ein im Wesentlichen T förmiges elektrisches Anschlussteil zu verstehen. Das Anschlussteil weist vorzugsweise einen eigenen Körper auf, der vom Material des Sparrenhalters separat ist. Die elektrischen Leitungen sin in den T-Verbinder integriert.

Eine Form des T-Verbinders kann insbesondere eine senkrechte T-Anordnung zweier Arme zu einem Fuß aufweisen, ist aber nicht darauf beschränkt zu verstehen. Denkbar sind vielmehr auch funktional gleichwertige Abweichungen von einer senkrechten Winkelstellung der T-Arme oder des T-Fußes. Beispielsweise können die T-Arme zueinander auch angestellt oder geschwungen ausgebildet sein, sodass sich eine Y artige Anordnung ergibt, die von einem erfindungsgemäßen T-Verbinder mit umfasst ist. Denkbar ist ferner auch eine schräge Anordnung des T-Fußes, sodass sich eine ebenfalls umfasste λ förmige Anordnung ergibt. Entscheidend ist die Abzweigung eines elektrischen Anschlusses für den in der Regel senkrecht zu einem Längsträgerprofil, an welchem die Lagerseite lagerbar ist, angeordneten Sparren durch den T-Verbinder. Eine konkrete Formgebung des T-Verbinders kann dabei von einer idealen T-Form abweichen und auch an die Ausnehmung des Sparrenhalters angepasst sein.

Die beiden T-Arme verbleiben erfindungsgemäß an der Lagerseite, sodass eine in einem Längsträgerprofil einer Überdachungsvorrichtung geführte Leitung auf einfache Weise daran anschließbar und durch den beidseitigen Anschluss darüber hinaus fortführbar ist.

Der erfindungsgemäße Sparrenhalter ist damit zur Durchführung von elektrischen Anschlüssen vorbereitet, ohne dass dazu Kabel verlegt werden müssen. Besonders vorteilhaft braucht somit nicht jeder Sparren einer Überdachungsvorrichtung mit einer eigenen Verkabelung versehen werden. Stattdessen kann eine zentrale Verkabelung für jeden Sparren auf einfache Weise abgezweigt werden.

Insbesondere müssen erfindungsgemäß keine einzelnen Kabel für jeden Sparren an dem Längsträgerprofil gezogen werden. Mit dem erfindungsgemäßen mit dem T-Verbinder versehenen Sparrenhalter kann ausgehend von einer im Längsträgerprofil verlaufenden elektrischen Anschlussleitung die Kontaktierung jedes einzelnen Sparrens über den Sparrenhalter auch noch nach einer Montage einer Überdachungsvorrichtung oder als einfach nachrüstbare Erweiterung bedarfsgerecht vorgenommen werden.

Die erfindungsgemäße elektrische Verbindbarkeit eines Sparrens mittels des erfindungsgemäßen Sparrenhalters kann vorzugsweise zur Beleuchtung der Überdachungsvorrichtung genutzt werden. Die Erfindung ist jedoch nicht auf eine Beleuchtungsanwendung beschränkt. Vielmehr können vielfältige Arten von elektrischen Anschlüssen, beispielsweise auch für Signalkabel, beispielsweise für Lautsprecher oder TV, zum elektrischen Anschluss von Wärmestrahlern, frei verwendbaren Steckdosen oder dergleichen genutzt werden.

Als Sparrenhalter ist jegliche Art von zur Halterung eines Sparrens an einem Längsträgerprofil geeignete Einrichtung anzusehen, welche eine zur Lagerung des Sparrenhalters an einem Längsträgerprofil ausgebildete Lagerseite und eine zur Befestigung eines Sparrens an dem Sparrenhalter ausgebildete Befestigungsseite aufweist. Insbesondere liegen die Lagerseite und die Befestigungsseite einander gegenüber. Zur Aufnahme des elektrischen T-Verbinders ist eine sich von der Lagerseite zur Befestigungsseite erstreckende Ausnehmung vorgesehen.

Die Lagerseite ist vorzugsweise derart ausgebildet, das der Sparrenhalter schwenkbar an einem Längsträgerprofil anbringbar ist. Die zur Herstellung eines Formschlusses erwünschte Längsverschieblichkeit sowie die zur Einstellung eines Neigungswinkels erwünschte Verschwenkbarkeit des Sparrenhalters relativ zu einem Längsträgerprofil bleiben dabei vollständig erhalten.

Die Befestigungsseite ist insbesondere zur Aufnahme eines Sparrenprofils ausgebildet. Dazu kann beispielsweise ein Formstumpf vorgesehen sein, welcher endseitig in das Sparrenprofil einführbar und damit befestigbar, beispielsweise verschraubbar, ist. Alternativ oder zusätzlich wäre auch eine das Sparrenprofil aufnehmende Tasche oder ein Beschlag an der Befestigungsseite denkbar, in welche(n) das Sparrenprofil von außen aufnehmbar ist.

Der Sparrenhalter ist vorzugsweise als Formteil, beispielsweise als Druckgussteil, ausgebildet. Dementsprechend weist er vorzugsweise ein Vollmaterial auf, welches zur Aufnahme des T-Verbinders derart ausgenommen ist, dass der T-Fuß des T-Verbinders von der Lagerseite zu der Befestigungsseite anordenbar ist.

Der T-Verbinder ist erfindungsgemäß in der Ausnehmung befestigt. Zur Befestigung des T-Verbinders in der Ausnehmung weist dieser und/oder die Ausnehmung vorzugsweise geeignete Befestigungsmittel auf.

Bei einer Ausnehmung zur Aufnahme des T-Verbinders handelt es sich um eine in den Sparrenhalter eingebrachte Durchgangsbohrung. Denkbar wäre jedoch beispielsweise auch eine an einer Seite, insbesondere der Unterseite, offene Ausnehmung des Sparrenhalters. Auch andersartig geformte zur Aufnahme und Befestigung des T-Verbinders geeignete Ausnehmungen sind denkbar.

Das Längsträgerprofil der Überdachungsvorrichtung kann unterschiedliche Ausgestaltungen aufweisen, beispielsweise kann es als Wandanschlussprofil oder als Pfette ausgebildet sein.

Unter einem in Längsrichtung lokal begrenzten Einführabschnitt ist ein lokaler ausgenommener Abschnitt zu verstehen, welcher sich nicht über die gesamte Länge des Längsträgerprofils hinweg sondern lediglich über einen vergleichsweise kleinen Teil oder Abschnitt der Länge des Längsträgerprofils erstreckt. Die Breite des Einführabschnitts ist dabei breit genug, um den lokal ausgenommen Lagerprofilabschnitt an der Lagerseite, insbesondere in den Umgreifabschnitt, des Sparrenhalters einzuführen. Der Einführabschnitt weist somit eine Breite auf, die insbesondere breiter als ein Umgreifabschnitt des Sparrenhalters ausgebildet ist. Beispielsweise kann es sich um eine Breite des Einführabschnitts im Bereich der ein- bis zweifachen Breite des Sparrenhalters handeln.

Im Übrigen ist das Längsträgerprofil in Längsrichtung insbesondere mit einer konstanten Querschnittsform ausgebildet. Vorzugsweise handelt es sich bei dem Lagerprofilabschnitt um einen, abgesehen von der Ausnehmung und etwaigen Rastmitteln zur Längssicherung, mit konstantem Querschnitt linear verlaufenden Abschnitt des Längsträgerprofils.

Die Herstellung eines Formschlusses wird insbesondere durch Verschieben des Sparrenhalters in Längsrichtung des Längsträgerprofils aus dem Einführabschnitt heraus, das heißt insbesondere in einen Bereich ohne Ausnehmung des Lagerprofilabschnitts, vorgenommen.

Das Verfahren zur Herstellung des Sparrenhalters kann einen Schritt bei der Vorfertigung einer Überdachungsvorrichtung, insbesondere Terrassenüberdachung, darstellen. Ein derart hergestellter Sparrenhalter ist vorteilhaft zur elektrischen Kontaktierung des Sparrens vorgerüstet bzw. vorbereitet.

Ein erfindungsgemäßer Sparrenhalter ist somit stets zur Kontaktierung von an dem Sparren anbringbaren Leuchtmitteln vorbereitet. Dies kann, braucht aber nicht notwendigerweise bei der Erstmontage der Überdachungsvorrichtung vorgenommen werden, sondern kann auch noch auf einfache Weise nachgerüstet werden.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer vorteilhaften Ausführungsform weisen der T-Fuß und die T-Arme jeweils einen zur elektrisch kontaktierenden Steckverbindung ausgebildeten Stecker auf. Insbesondere können die Stecker an den T-Armen und dem T-Fuß gleich ausgebildet sein. Denkbar wäre jedoch auch eine unterschiedliche Ausbildung. Es handelt sich vorzugsweise um einen für den Außeneinsatz geeigneten Steckertyp. Die Stecker fügen sich vorzugsweise vollständig in die Form des T-Verbinders ein. Insbesondere ist der an dem T-Fuß vorgesehene Stecker derart ausgebildet und ausgelegt, dass ein Leuchtmittel mit korrespondierendem Stecker durch gerades Verschieben entlang des Sparrens ohne zusätzliche Schritte direkt damit kontaktierbar ist. Somit ist ein Leuchtmittel durch Einschieben entlang des Sparrens einfach montierbar und ohne zusätzlichen Aufwand, insbesondere ohne manuelles kontaktieren, elektrisch anschließbar.

Gemäß einer vorteilhaften Ausführungsform weist die Befestigungsseite eine Sparrenaufnahme auf, wobei der T-Fuß unterhalb der Sparrenaufnahme angeordnet ist. Auf diese Weise eignet sich der T-Fuß besonders gut zur Kontaktierung eines an der Unterseite des Sparrens angebrachten Leuchtmittels. Insbesondere ist der T-Fuß so auf gleicher Höhe mit der Unterseite des Sparrens oder einer an der Unterseite des Sparrens verlaufenden Nut angeordnet, sodass ein an der Unterseite des Sparrens oder in der Nut befestigtes Leuchtmittel ohne weitere Überbrückung direkt mit dem T-Fuß kontaktierbar ist.

Gemäß einer bevorzugten Ausführungsform weist die Lagerseite einen Umgreifabschnitt auf, der zur formschlüssigen Lagerung an einem Lagerprofilabschnitt eines Längsträgerprofils ausgebildet ist. Die T-Arme sind dabei in Höhenrichtung zu dem Umgreifabschnitt versetzt angeordnet. Als Umgreifabschnitt ist ein Abschnitt des Sparrenhalters zu verstehen, welcher zum Umgreifen des Lagerprofilabschnitts des Längsträgerprofils einer Überdachungsvorrichtung geeignet ist. Der Lagerprofilabschnitt wird bei einem Umgreifen zumindest teilweise, insbesondere zumindest an zwei gegenüberliegenden Seiten, derart gegriffen, dass eine formschlüssige gelenkige Kopplung des Sparrenhalters mit dem Längsträgerprofil besteht. Insbesondere sind die T-Arme unterhalb des Umgreifabschnitts angeordnet, was insbesondere bei einer Positionierung des T-Fußes unterhalb einer Sparrenaufnahme besonders vorteilhaft ist. In diesem Fall kann der T-Verbinder in etwa gleich wie der Sparrenhalter ausgerichtet sein, sodass das Setzen einer zur Aufnahme des T-Verbinders ausgelegten Durchgangsbohrung im Wesentlichen gerade durch den Sparrenhalter vorgenommen werden kann. Vorteilhaft werden somit schwieriger zu fertigende schräge Bohrungen, komplex geformter andersartige Ausnehmungen oder dergleichen vermieden.

Die Anordnung der T-Arme unterhalb des Umgreifabschnitts ist ferner für die Kabelführung einer Anschlussleitung innerhalb des Längsträgerprofils vorteilhaft, da das Wandanschlussprofil unterhalb des Lagerprofilabschnittes üblicherweise einen vorstehenden Bereich aufweist, in welchem ein Kabelschacht vorgesehen werden kann. Bei einer erfindungsgemäßen Überdachungsvorrichtung ist somit vorzugsweise ein Kabelschacht unterhalb des Lagerprofilabschnitts an dem Längsträgerprofil vorgesehen. Die in dem Kabelschacht geführte Anschlussleitung braucht dann zur Kontaktierung lediglich über eine sehr kurze Distanz aus dem Kabelschacht an den T-Verbinder geführt werden. Insbesondere ist die Anschlussleitung dazu bereits vorkonfektioniert ausgebildet, sodass zwischen benachbarten Sparrenhaltern einer Überdachungsvorrichtung, welche in einem vorbestimmten Abstand voneinander angeordnet sind, je eine vorkonfektionierte Anschlussleitung verläuft, die mit dem jeweiligen T-Verbinder kontaktiert ist.

Erfindungsgemäß ist der T-Verbinder in eine von der Lagerseite zu der Befestigungsseite reichende Durchgangsbohrung eingesetzt. Vorteilhaft ermöglicht dies eine einfache Montage durch Einschieben des T-Verbinders in die Durchgangsbohrung.Gemäß einer vorteilhaften Weiterbildung weist die Durchgangsbohrung einen Absatz und der T-Verbinder an dem Absatz verrastete Rastmittel auf. Vorteilhaft ist somit zur Montage kein zusätzlicher Befestigungsschritt nötig.

Gemäß einer weiteren vorteilhaften Weiterbildung ist an der Lagerseite eine Aufnahme für die T-Arme vorgesehen. Insbesondere ist die Aufnahme in Form eines Aufnahmeclips ausgebildet, in welchen die T-Arme zumindest abschnittsweise eingeclipst sind. Somit ist der T-Verbinder auch gegen Verdrehen gesichert. Andererseits ist so auch eine mechanische Unterstützung der T-Arme, insbesondere beim Kontaktieren mit einer Anschlussleitung, gewährleistet. Dies lässt insgesamt eine einfache und komfortable Montage und Kontaktierung des T-Verbinders zu.

Gemäß einer bevorzugten Ausführungsform einer Überdachungsvorrichtung ist an der Befestigungsseite des Sparrenhalters ein Sparren befestigt, an dessen Unterseite ein mit dem T-Fuß des T-Verbinders kontaktierbares Leuchtmittel angebracht ist. Bei dem Leuchtmittel kann es sich insbesondere um einen LED-Streifen mit zu dem T-Fuß korrespondierendem Stecker handeln. Insbesondere weist der Sparren eine Nut zur Aufnahme des LED Streifens auf.

Bei einer vorteilhaften Ausführungsform ist der LED Streifen ist in ein Profil eingelassen, welches in die Nut einschiebbar ist. Somit kann eine Kontaktierung mit dem T-Fuß durch Einschieben des LED-Streifens in die Nut hergestellt werden. Die Nut kann beispielsweise mit einer transparenten oder teiltransparenten Abdeckung versehen sein. Auf diese Weise ist die Beleuchtung samt Leuchtmittel und Kontaktierung in die Profile der Sparren integriert. Vorteilhaft ist ferner eine sehr einfache Montage ohne zusätzliche Kontaktierungsschritte und zugleich eine optisch besonders ansprechenden Beleuchtung an dem Sparren realisiert. Insbesondere ist auf diese Weise auch eine sehr einfache Nachrüstbarkeit einer derartigen integrierten Beleuchtung ermöglicht.

Gemäß einer vorteilhaften Ausführungsform der Überdachungsvorrichtung verläuft in dem Längsträgerprofil eine elektrische Anschlussleitung, welche an der Lagerseite des Sparrenhalters mit einem ersten T-Arm des T-Verbinders kontaktiert ist. Vorzugsweise verläuft die Anschlussleitung in einem unterhalb des Lagerprofilabschnittes vorgesehenen Kabelkanal des Längsträgerprofils. Bei einer vorteilhaften Weiterbildung verläuft die elektrische Anschlussleitung ausgehend von dem zweiten T-Arm weiter in dem Längsträgerprofil zum Anschluss eines weiteren Sparrenhalters. Dies wird vorzugsweise bis zu einem letzten Sparrenhalter fortgeführt. Vorteilhaft sind somit für die einzelnen Sparren keine individuellen Anschlussleitungen nötig. Stattdessen kann eine gemeinsame bzw. zentrale Anschlussleitung zur Kontaktierung aller Sparren einer Überdachungsvorrichtung genutzt werden.

Bei einer vorteilhaften Ausführungsform des Verfahrens zur Herstellung eines Sparrenhalters ist die Ausnehmung als Durchgangsbohrung ausgebildet, wobei ein T-Fuß des T-Verbinders von der Lagerseite zu der Befestigungsseite in die Durchgangsbohrung eingeführt wird. Bei einer Weiterbildung ist die Durchgangsbohrung von der Befestigungsseite her mit einem Absatz versehen ist, so dass ein Bohrungsdurchmesser an der Befestigungsseite größer als an der Lagerseite ist, wobei das Einsetzen des T-Verbinders ein Verrasten von an dem T-Fuß angeordneten Rastmitteln des T-Verbinders an dem Absatz umfasst. Somit ist der T-Verbinder bei dem Einsetzen direkt in der Bohrung gesichert und es ist kein zusätzlicher Befestigungsschritt nötig.

Bei einer weiteren vorteilhaften Ausführungsform ist an der Lagerseite des Sparrenhalters zumindest ein Aufnahmeclip zur Aufnahme von T-Armen des T-Verbinders vorgesehen. Das Einsetzen des T-Verbinders umfasst in diesem Fall ein Einclipsen der T-Arme in den Aufnahmeclip. Auf diese Weise ist der T-Verbinder einerseits gegen Verdrehen gesichert. Andererseits ist so auch eine mechanische Unterstützung der T-Arme gewährleistet.

Die obigen Ausgestaltungen und Weiterbildungen lassen sich, sofern sinnvoll, beliebig miteinander kombinieren. Insbesondere sind auch sämtliche Merkmale des Sparrenhalters auf eine Überdachungsvorrichtung mit einem solchen Sparrenhalter sowie auf das Verfahren zu dessen Herstellung übertragbar, und umgekehrt. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine perspektivische Ansicht eines Sparrenhalters;
- Fig. 2: eine perspektivische Einzeldarstellung eines T-Verbinders;
- Fig. 3: eine Querschnittansicht eines Sparrenhalters ohne T-Verbinder;
- Fig. 4A: eine Darstellung des Einsetzens eines T-Verbinders in einen Sparrenhalter;
- Fig. 4B: eine horizontale Schnittdarstellung im Bereich von Rastmitteln des T-Verbinders;
- Fig. 4C: eine Querschnittdarstellung im Bereich eines Aufnahmeclips zur Aufnahme der T-Arme;
- Fig. 5: eine perspektivische Darstellung der Befestigungsseite eines Sparrenhalters;
- Fig. 6: eine perspektivische Schnittdarstellung eines Leuchtmittels;
- Fig. 7: eine perspektivische Darstellung eines Sparrens;
- Fig. 8: eine perspektivische Darstellung einer Überdachungsvorrichtung;
- Fig. 9: eine schematische Darstellung einer beispielhaften Anschlussreihenfolge;
- Fig. 10: eine perspektivische Darstellung einer Terrassenüberdachung mit Wandanschluss; und
- Fig. 11: eine perspektivische Darstellung einer Terrassenüberdachung mit Firstpfette.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

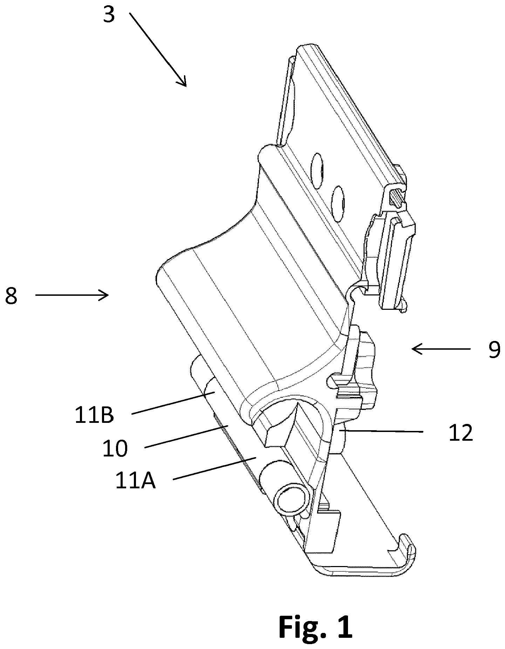

Fig. 1 zeigt eine perspektivische Ansicht eines Sparrenhalters 3.

Der Sparrenhalter 3 ist für eine Überdachungsvorrichtung 1 bestimmt und entsprechend zur Halterung eines Sparrens 5 einer Überdachungsvorrichtung 1 ausgebildet. Bei der dargestellten Ausführungsform handelt es sich um einen Sparrenhalter 3 für eine Terrassenüberdachung.

Der Sparrenhalter 3 ist als ein Druckgussteil dreidimensional geformt und weist eine Lagerseite 8 und eine Befestigungsseite 9 auf. Die Lagerseite 8 und die Befestigungsseite 9 sind einander gegenüberliegend angeordnet. Die Lagerseite ist dabei zur drehbaren Lagerung des Sparrenhalters 3 an einem Längsträgerprofil 2 einer Überdachungsvorrichtung 1 ausgebildet. Die Befestigungsseite 9 ist zur Befestigung eines Sparrens 5 an dem Sparrenhalter 3 ausgebildet.

Der Sparrenhalter 3 weist einen elektrischen T-Verbinder 10 auf, welcher zur elektrischen Verbindung der Lagerseite 8 mit der Befestigungsseite 9 ausgebildet ist. Dazu weist der T-Verbinder zwei T-Arme 11A, 11B und einen T-Fuß 12 auf, wobei sich die beiden T-Arme 11A, 11B entlang der Lagerseite 8 erstrecken und sich der T-Fuß 12 des T-Verbinders 10 durch eine Ausnehmung des Sparrenhalters 3 hindurch von der Lagerseite 8 zu der Befestigungsseite 9 erstreckt.

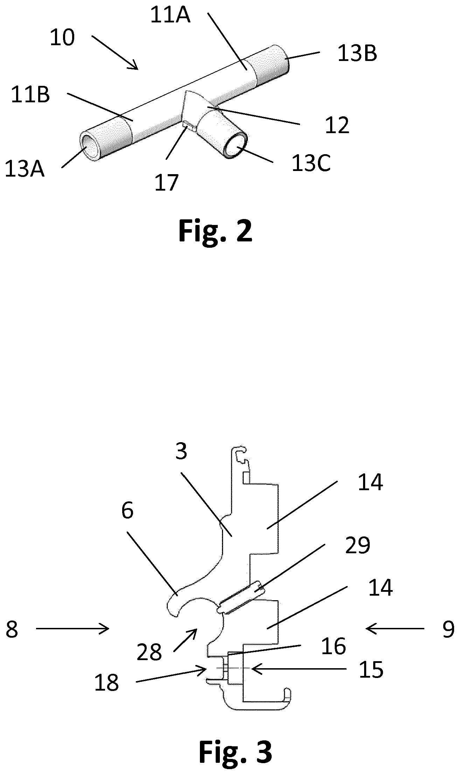

Fig. 2 zeigt eine perspektivische Einzeldarstellung eines T-Verbinders.

Der T-Verbinder ist in der hier dargestellten beispielhaften Ausführungsform als rohrförmiges T-Stück mit einem runden Querschnitt ausgebildet. Der T-Fuß 12 ist senkrecht zu den T-Armen 11A, 11B ausgerichtet und weist einen gleichen Durchmesser wie die T-Arme 11A, 11B auf. Die runde Form, insbesondere des T-Fußes ist 12 ist vorteilhaft in einfacher Weise in eine als Bohrung ausgestaltete Ausnehmung des Sparrenhalters 3 einführbar.

An dem T-Fuß sind Rastmittel 17 in Form von Widerhaken vorgesehen, welche zum Befestigen des T-Verbinders in der Ausnehmung des Sparrenhalters 3 ausgebildet sind.

Der T-Fuß 12 und die T-Arme 11A, 11B weisen an ihren Enden jeweils einen zur elektrisch kontaktierenden Steckverbindung ausgebildeten Stecker 13A, 13B, 13C auf. Insbesondere handelt es sich um einen für den Außeneinsatz geeigneten Steckertyp.

Die Stecker 13A, 13B, 13C sind hier ebenfalls mit einem runden Querschnitt und einem gleichen Durchmesser wie das rohrförmige T-Stück ausgebildet. Die Stecker fügen sich 13A, 13B, 13C somit vollständig in die Form des T-Verbinders ein.

Elektrisch ist zwischen den Steckern 13A und 13B eine Durchgangsleitung vorgesehen, wobei der Stecker 13C eine von der Durchgangsleitung abzweigende Leitung enthält, die von der Durchgangsleitung versorgt wird.

Fig. 3 zeigt eine Querschnittansicht eines Sparrenhalters 3 ohne den T-Verbinder 10.

Zur besseren Übersichtlichkeit wurde hier von einer Schraffur des Vollmaterials abgesehen.

An der hier links dargestellten Lagerseite 8 weist der Sparrenhalter 3 einen Umgreifabschnitt 6 auf, der zur formschlüssigen Lagerung an einem Lagerprofilabschnitt 4 ausgebildet ist.

Der Umgreifabschnitt 6 ist mit einer zu einem kreiszylindrischen Lagerprofilabschnitt 4 korrespondierenden Ausnehmung 28 gebildet. Dementsprechend handelt es sich bei der dargestellten Ausführungsform beispielhaft um eine kreiszylinderförmige Ausnehmung 28.

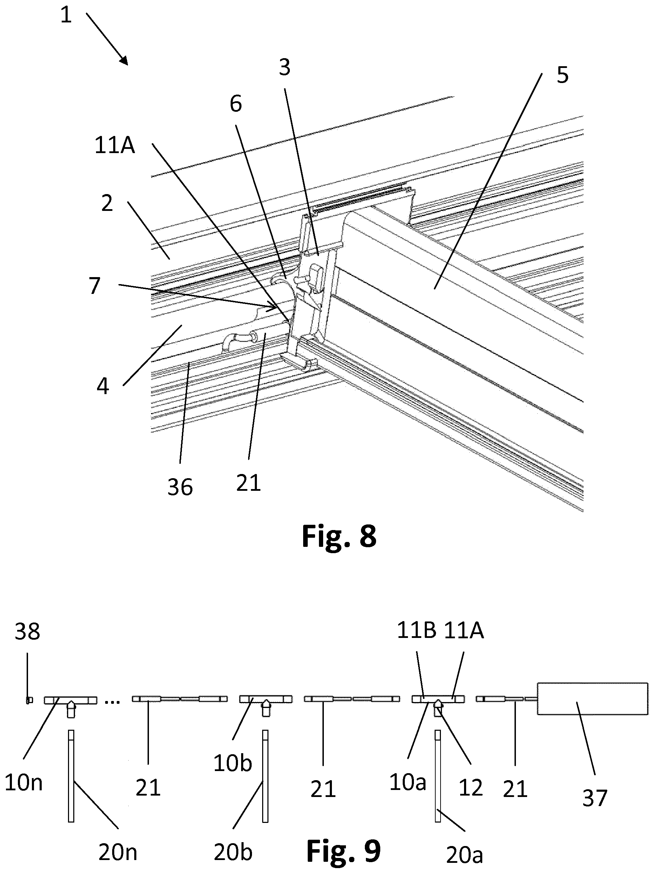

Der Umgreifabschnitt 6 mit seiner Ausnehmung 28 ist zur formschlüssigen Lagerung an dem Lagerprofilabschnitt 4 eines Längsträgerprofils 2 ausgebildet, wie in Fig. 8 dargestellt. Im montierten Zustand umgreift er dazu den Lagerprofilabschnitt 4 insoweit, dass eine formschlüssige Verbindung bereitgestellt ist, welche durch die kreiszylindrische Form des Lagerprofilabschnitts 4 und der Ausnehmung 28 schwenkbar ist.

Zur Längssicherung des Sparrenhalters 3 an dem Lagerprofilabschnitt 4 ist an dem Umgreifabschnitt 6 ein Rastmittel 29 angeordnet, welches zum Eingriff in ein an dem Lagerprofilabschnitt 4 vorgesehenes Gegenrastmittel ausgebildet ist. Bei der dargestellten Ausführungsform ist das Rastmittel 29 als federndes Druckstück ausgebildet.

An einer gegenüberliegenden Befestigungsseite 9 weist der Sparrenhalter 3 eine zweiteilige Sparrenaufnahme 14 auf. Die Sparrenaufnahme 14 entspricht insbesondere einer Negativform eines mit dem Sparrenhalter 3 zu haltenden Sparrenprofils. Die Sparrenaufnahme 14 ist dementsprechend in ein Sparrenprofil stirnseitig einführbar und damit befestigbar, beispielsweise verschraubbar oder verschweißbar.

Unterhalb des Umgreifabschnitts 6 und unterhalb der Sparrenaufnahme 14 ist an dem Sparrenhalter 3 eine Ausnehmung 15 zur Aufnahme des T-Verbinders 10 vorgesehen.

Bei der dargestellten Ausführungsform handelt es sich bei der Ausnehmung 15 um eine mit einem Absatz 16 ausgebildete Durchgangsbohrung. Der Absatz 16 ist von der Befestigungsseite 9 her vorgesehen, sodass die Durchgangsbohrung an der Befestigungsseite 9 einen größeren Durchmesser aufweist als an der Lagerseite 8.

An der Lagerseite 8 weist der Sparrenhalter 3 im Bereich der Ausnehmung 15 eine Aufnahme 18 zur zumindest abschnittsweisen drehsicheren Aufnahme der T-Arme 11A, 11B des T-Verbinders 10 auf.

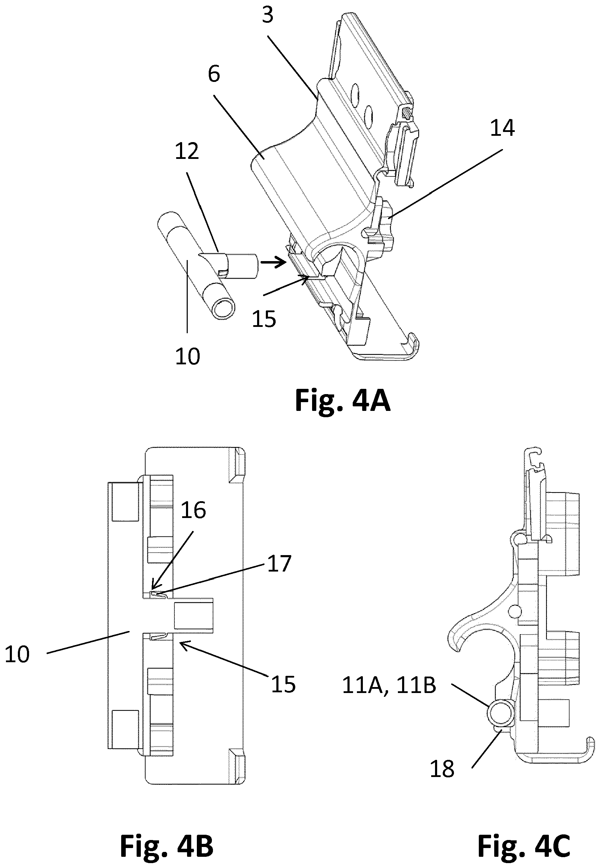

Fig. 4A zeigt eine Darstellung des Einsetzens eines T-Verbinders 10 in einen Sparrenhalter 3.

Es handelt sich dabei um einen Schritt eines Verfahren zur Herstellung eines Sparrenhalters 3, wobei der elektrische T-Verbinder 10 in die Ausnehmung 15 eingesetzt wird, welche von einer zur Lagerung des Sparrenhalters 3 an einem Längsträgerprofil 2 ausgebildeten Lagerseite 8 zu einer zur Befestigung eines Sparrens 5 an dem Sparrenhalter 3 ausgebildeten Befestigungsseite 9 reicht. Der T-Fuß 12 des T-Verbinders 10 wird dazu von der Lagerseite 8 zu der Befestigungsseite 9 in die Ausnehmung 15 eingeführt.

Da die Ausnehmung 15 unterhalb des Umgreifabschnitts 6 und unterhalb der Sparrenaufnahme 14 angeordnet ist, sind somit auch die T-Arme 11A, 11B des in die Ausnehmung 15 eingesetzten T-Verbinders 10 in Höhenrichtung zu dem Umgreifabschnitt 6 versetzt unterhalb angeordnet. Ferner ist der T-Fuß 12 unterhalb der Sparrenaufnahme 14 angeordnet.

Fig. 4B zeigt eine horizontale Schnittdarstellung im Bereich von Rastmitteln 17 des T-Verbinders 10.

Die als Durchgangsbohrung ausgebildet Ausnehmung 15 ist von der Befestigungsseite 9 her mit dem Absatz 16 versehen, so dass die Rastmittel 17 in Form von Widerhaken daran einrasten. Das Einsetzen des T-Verbinders 10 umfasst dementsprechend ein Verrasten von an dem T-Fuß 12 angeordneten Rastmitteln des T-Verbinders 10 an dem Absatz 16.

Fig. 4C zeigt eine Querschnittdarstellung im Bereich eines Aufnahmeclips zur Aufnahme der T-Arme 11A, 11B.

An der Lagerseite 8 ist im Bereich der Ausnehmung 15 eine Aufnahme 18 für die T-Arme 11A, 11B vorgesehen, welche hier in Form eines Aufnahmeclips ausgebildet ist. Die T-Arme 11A, 11B sind in der Aufnahme 18 eingeclipsbar. Das Einsetzen des T-Verbinders 10 umfasst dementsprechend auch ein Einclipsen der T-Arme 11A, 11B in den Aufnahmeclip.

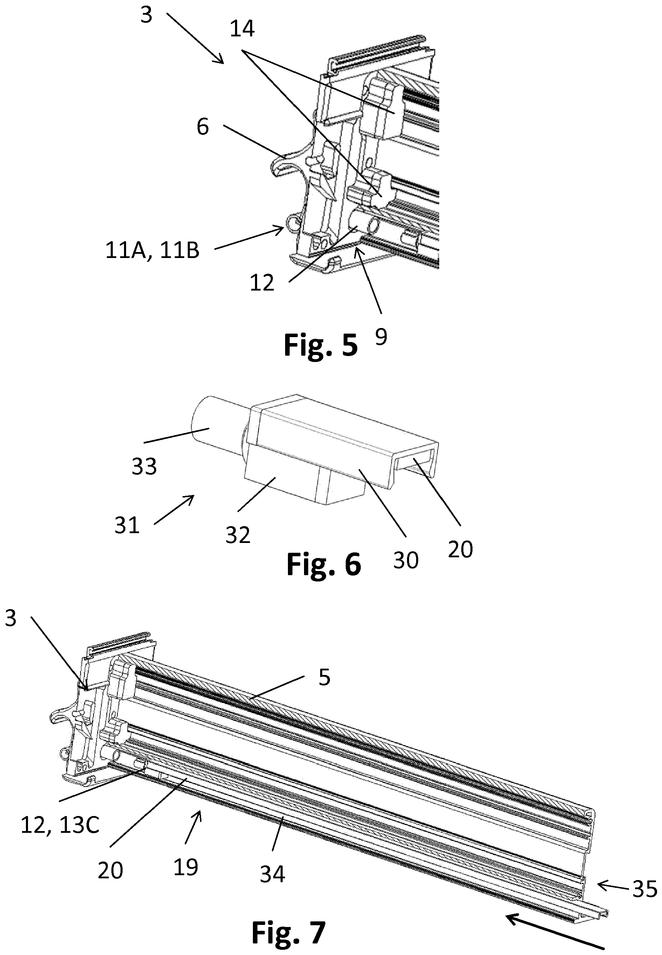

Fig. 5 zeigt eine perspektivische Darstellung der Befestigungsseite 9 eines Sparrenhalters 3.

In dieser Darstellung ist nochmals die Anordnung des T-Fußes 12 unterhalb der Sparrenaufnahme 14 sowie der T-Arme 11A, 11B unterhalb des Umgreifabschnitts 6 gut erkennbar.

Fig. 6 zeigt eine perspektivische Schnittdarstellung eines Leuchtmittels 20.

Dargestellt ist hier lediglich ein endseitiger Abschnitt des Leuchtmittels 20, an welchem ein zu dem T-Fuß 12 des T-Verbinders 10 korrespondierender Stecker 31 vorgesehen ist. Tatsächlich kann ein derartiges Leuchtmittel 20 eine vergleichsweise große Länge, insbesondere eine sich über die gesamte Länge eines Sparrenprofils erstreckende Länge, aufweisen.

Das Leuchtmittel 20 ist als LED Streifen ausgebildet, welcher in einem Profil 30 aufgenommen ist. Das Profil 30 stellt eine mechanische Stabilität des LED-Streifens sicher, was ein Einführen des Leuchtmittels 20 von einer Stirnseite eines Sparrenprofils her, beispielsweise in eine Nut 34 des Sparrenprofils, erlaubt.

Der Stecker 31 ist mit einem Steckerkörper 32 und einem Steckerkopf 33 gebildet. Der Steckerkopf 33 ist insbesondere in einen Stecker 13C des T-Fußes einführbar ausgebildet. Der Steckerkörper 32 ist vorzugsweise korrespondierend zu einer das Leuchtmittel 20 in dem Sparrenprofil aufnehmenden Nut 34 ausgebildet und dient als Positionierungshilfe zur Einstellung einer für die Kontaktierung mit dem Stecker 13C des T-Fußes 12 korrekten Position des Steckerkopfes 33 innerhalb der Nut 34.

Fig. 7 zeigt eine perspektivische Darstellung eines Sparrens 5.

Der Sparren 5 ist hier geschnitten dargestellt und mit einem hohlen Sparrenprofil gebildet, welches an der Befestigungsseite 8 des Sparrenhalters 3 befestigt ist. An der Unterseite 19 des Sparrens 5 ist ein mit dem T-Fuß 12 des T-Verbinders 10 kontaktierbares Leuchtmittel 20 gemäß Fig. 6 angebracht. Der Sparren 5 weist dazu an der Unterseite 19 eine Nut 34 auf, welche zur Aufnahme des als LED Streifen ausgebildeten Leuchtmittels 20 aufweist.

Der in das Profil 30 eingelassene LED Streifen 20 ist von einer Stirnseite 35 des Sparrenprofils her in die Nut 34 eingeschoben, wie mit dem dicken Pfeil in Figur 7 symbolisiert. Eine Kontaktierung des Leuchtmittels 20 wird ohne zusätzliche Schritte durch das Einschieben in den Stecker 13C des T-Fußes 12 hergestellt.

Fig. 8 zeigt eine perspektivische Darstellung einer Überdachungsvorrichtung 1.

Bei der dargestellten Ausführungsform der Überdachungsvorrichtung 1 handelt es sich um eine Terrassenüberdachung.

Die Überdachungsvorrichtung 1 weist ein Längsträgerprofil 2 auf, welches zur Lagerung eines Sparrenhalters 3 ausgebildet ist und einen zur Lagerung des Sparrenhalters 3 ausgebildeten Lagerprofilabschnitt 4 aufweist.

Das Längsträgerprofil 2 ist beispielhaft als Strangpressprofil ausgebildet. Insbesondere enthält es Aluminium. Andere strangpressbare Werkstoffe, beispielsweise Kunststoffe, wären alternativ oder zusätzlich ebenfalls denkbar. Der Lagerprofilabschnitt 4 ist dementsprechend vorzugsweise einteilig mit den übrigen Teilen des Wandanschlussprofils 2 ausgebildet.

Der Lagerprofilabschnitt 4 ist mit einer abschnittsweise runden Form, hier beispielhaft einer Hohlkreiszylinderform, welche einteilig über Stützstreben 16 an einen Wandanschlussbereich des Wandanschlussprofils 2 angebunden sind, gebildet. Das Längsträgerprofil 2 weist einen oder mehrere Einführabschnitte 7 auf. In diesen Einführabschnitten 7 ist der Lagerprofilabschnitt 4 lokal ausgenommen, hier beispielhaft mit einer sekantenartigen Ausnehmung.

Die Überdachungsvorrichtung weist ferner einen gemäß Fig. 6 ausgebildeten Sparren 5 sowie einen zur Halterung bzw. Lagerung des Sparrens 5 an dem Längsträgerprofil 2 ausgebildeten und damit befestigten, beispielsweise verschraubten, Sparrenhalter 3 auf. Der Sparrenhalter 3 ist wie in Bezug auf die Figuren 1 bis 5 beschrieben ausgebildet.

Die Lagerseite 8 des Sparrenhalters 3 ist an dem Einführabschnitt 7 einführbar und an dem Lagerprofilabschnitt 4 längsverschieblich ausgebildet. Durch Längsverschiebung ist somit ein Formschluss zwischen dem Sparrenhalter 3 und dem Lagerprofilabschnitt 4 herstellbar.

In dem Längsträgerprofil 2 verläuft eine elektrische Anschlussleitung 21, welche an der Lagerseite 8 des Sparrenhalters 3 mit einem ersten T-Arm 11A des T-Verbinders 10 kontaktiert ist. Vorzugsweise verläuft die Anschlussleitung 21 in einem unterhalb des Lagerprofilabschnittes 4 vorgesehenen Kabelkanal 36 des Längsträgerprofils 2.

Ausgehend von dem hier verdeckten zweiten T-Arm 11B verläuft die elektrische Anschlussleitung 21 weiter in dem Kabelkanal des Längsträgerprofils 2 zum Anschluss eines weiteren hier nicht dargestellten Sparrenhalters.

Fig. 9 zeigt eine schematische Darstellung einer beispielhaften Anschlussreihenfolge.

Ausgehend von einer hier lediglich schematisch symbolisierten Energiequelle 37 verläuft die Anschlussleitung 21 durch das Längsträgerprofil 2 zu einem ersten in einen Sparrenhalter 3a eingesetzten T-Verbinder 10a. Ein Anschlussstecker der Anschlussleitung 21 ist mit dem Anschlussstecker 13A des ersten T-Armes 11A kontaktiert.

An dem T-Fuß 12 des T-Verbinders 10a ist ein an dem zugehörigen ersten Sparren 5a angeordnetes Leuchtmittel 20a angeschlossen.

Ausgehend von dem zweiten T-Arm 11B des T-Verbinders 10a verläuft die elektrische Anschlussleitung 21 weiter in dem Längsträgerprofil 2 zum Anschluss eines in einem weiteren Sparrenhalter 3b eingesetzten zweiten T-Verbinders 10b, welche mit einem in einem weiteren Sparren 5b angeordneten Leuchtmittel 20b kontaktiert ist. Die Anschlussleitung ist dazu in Form von vorkonfektionierten, die T-Stücke verbindenden Verbindungsleitungen ausgebildet.

Von dem zweiten T-Verbinder 10b verläuft die Anschlussleitung 21 weiter in dem Längsträgerprofil 2 zum Anschluss eines in einen letzten Sparrenhalter 3n einer Überdachungsvorrichtung eingesetzten T-Verbinders 10n, welcher mit einem Leuchtmittel 20n kontaktiert ist. Ein freies Ende des letzten T-Verbinders 10n ist mit einer Verschlusskappe 38 versehen.

Zwischen dem zweiten T-Verbinder 10b und dem letzten T-Verbinder 10n können in gleicher Weise eine beliebige Anzahl weiterer T-Verbinder, welche in weitere Sparrenhalter eingesetzt sind, kontaktiert sein, wie mit den dazwischen eingezeichneten drei Punkten symbolisiert.

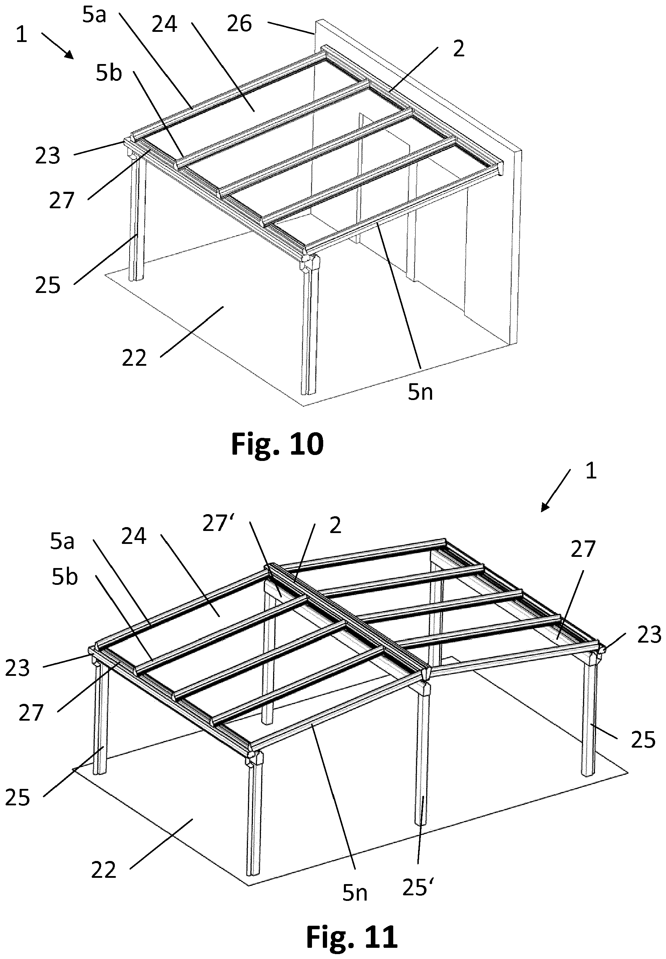

Fig. 10 zeigt eine perspektivische Darstellung einer Terrassenüberdachung mit Wandanschluss.

Bei der Terrassenüberdachung handelt es sich um eine Ausführungsform der Überdachungsvorrichtung 1, bei welcher das Längsträgerprofil 2 als an einer Wand 26 befestigtes Wandanschlussprofil ausgebildet ist.

In der dargestellten Ausführungsform weist die Überdachungsvorrichtung 1 eine Mehrzahl paralleler Sparren 5a, 5b, ..., 5n auf, welche an dem Längsträgerprofil 2 gehaltert sind. Zwischen zwei benachbarten Sparren 5a, 5b, ..., 5n verläuft jeweils eine Ausfachung 24, die beispielhaft als Glasausfachung ausgeführt ist. Alternativ oder zusätzlich kann aber auch eine Ausfachung 24 in Form von andersartigen Platten, beispielsweise sogenannten Doppelstegplatten oder lichtundurchlässigen Platten vorgesehen sein.

An einem dem Längsträgerprofil 2 gegenüberliegenden Ende der Sparren 5a, 5b, ..., 5n sind diese über ein Schwenklager an einer parallel zu dem Längsträgerprofil 2 verlaufenden Pfette 27 gelagert. Ein Anstellwinkel der Sparren 5a, 5b, ..., 5n ist relativ zu der Wand 26 bzw. des daran fixierten Wandanschlussprofils 2 positiv, sodass die Überdachungsvorrichtung 1 von dem Längsträgerprofil 2 aus zu der Pfette 27 hin abfällt. Die Pfette 27 bildet hier somit eine Fußpfette.

Die Pfette 27 wird von zwei endseitig daran angebrachten Pfosten 25 gestützt, welche in einem Boden 22 verankert sind.

Am dem Längsträgerprofil 2 abgewandten Ende der Sparren 5a, 5b, ..., 5n ist ferner eine quer zu den Sparren 5 bzw. parallel zu der Pfette 19 verlaufende Dachrinne 23 mit zugehörigem Abflussrohr zur Aufnahme und Abführung von Niederschlag vorgesehen.

Erfindungsgemäß lässt sich eine derartige Terrassenüberdachung auf sehr einfache Weise mit einer in die Profile der Sparren 5a, 5b, ..., 5n integrierten Beleuchtung versehen. Die Anschlussleitung 21 wird dazu in dem Längsträgerprofil 2 geführt und die in die einzelnen Sparren 5a, 5b, ..., 5n eingeführten Leuchtmittel 20 werden über die in die Sparrenhalter 3a, 3b, ..., 3n eingesetzten T-Verbinder 10a, 10b, ..., 10n in der in Bezug auf Fig. 6 bis 9 beschriebenen Weise kontaktiert.

Darüber hinaus kann die Terrassenüberdachung mit den in der DE 20 2016 005 196 U1 weiter im Detail beschriebenen weiteren Elementen aufgebaut sein.

Fig. 11 zeigt eine perspektivische Darstellung einer Terrassenüberdachung mit Firstpfette.

Im Unterschied zur Ausführungsform gemäß Fig. 10 ist die Überdachungsvorrichtung 1 hier nicht in Anschluss an eine Wand, sondern freistehend und beidseitig abfallend ausgebildet.

Das Längsträgerprofil 2 ist hier dementsprechend als Firstpfette ausgebildet und weist beidseitig je einen Lagerprofilabschnitt 4, sowie alle weiteren in Bezug auf die vorstehenden Figuren beschriebenen Elemente des Längsträgerprofils 2 auf. Das als Firstpfette ausgebildete Längsträgerprofil 2 ist mittels eines Schwenklagers gelenkig an einer parallel zu dem Längsträgerprofil 2 verlaufenden Pfette 27' gelagert, welche endseitig an mittleren Pfosten 25' gelagert ist.

Beidseitig sind hier an dem jeweils dem Längsträgerprofil 2 abgewandten Ende der Sparren 5a, 5b, ..., 5n als Fußpfetten angeordnete Pfetten 27 und Dachrinnen 23 vorgesehen, die in gleicher Weise wie in Bezug auf Fig. 10 beschrieben ausgebildet sind.
Eine Beleuchtung ist hier in gleicher Weise wie in Bezug auf Fig. 10 beschrieben beidseitig integrierbar.
Obwohl die vorliegende Erfindung anhand bevorzugter Ausführungsbeispiele vorstehend vollständig beschrieben wurde, ist sie darauf nicht beschränkt, sondern auf vielfältige Art und Weise und wie in den beigefügten Ansprüchen definiert modifizierbar.

### Bezugszeichenliste

- 1: Überdachungsvorrichtung
- 2: Längsträgerprofil
- 3: Sparrenhalter
- 4: Lagerprofilabschnitt
- 5: Sparren
- 6: Umgreifabschnitt
- 7: Einführabschnitt
- 8: Lagerseite
- 9: Befestigungsseite
- 10: T-Verbinder
- 11A, 11B: T-Arme
- 12: T-Fuß
- 13A, 13B, 13C: Stecker
- 14: Sparrenaufnahme
- 15: Durchgangsbohrung
- 16: Absatz
- 17: Rastmittel
- 18: Aufnahme
- 19: Unterseite
- 20: Leuchtmittel
- 21: Anschlussleitung
- 22: Boden
- 23: Dachrinne
- 24: Ausfachung
- 25: Pfosten
- 26: Wand
- 27: Pfette
- 28: Ausnehmung
- 29: Rastmittel
- 30: Profil
- 31: Stecker
- 32: Steckerkörper
- 33: Steckerkopf
- 34: Nut
- 35: Stirnseite
- 36: Kabelkanal
- 37: Energiequelle
- 38: Verschlusskappe

## Patentansprüche

1. Sparrenhalter (3) für eine Überdachungsvorrichtung (1), insbesondere für eine Terrassenüberdachung, mit einer Lagerseite (8), welche zur Lagerung des Sparrenhalters (3) an einem Längsträgerprofil (2) ausgebildet ist,
einer Befestigungsseite (9), welche zur Befestigung eines Sparrens (5) an dem Sparrenhalter (3) ausgebildet ist,
durch einen elektrischen T-Verbinder (10) gekennzeichnet,
welcher zur elektrischen Verbindung der Lagerseite (8) mit der Befestigungsseite (9) ausgebildet ist, wobei sich zwei T-Arme (11A, 11B) des T-Verbinders (10) entlang der Lagerseite (8) erstrecken und sich ein T-Fuß (12) des T-Verbinders (10) von der Lagerseite (8) zu der Befestigungsseite (9) erstreckt, wobei der T-Verbinder (10) in eine von der Lagerseite (8) zu der Befestigungsseite (9) reichende Durchgangsbohrung (15) eingesetzt ist.

2. Sparrenhalter nach Anspruch 1,
**dadurch gekennzeichnet,**
**dass** der T-Fuß (12) und die T-Arme (11A, 11B) jeweils einen zur elektrisch kontaktierenden Steckverbindung ausgebildeten Stecker (13A, 13B, 13C) aufweisen.

3. Sparrenhalter nach Anspruch 1 oder 2,
**dadurch gekennzeichnet,**
**dass** die Befestigungsseite (9) eine Sparrenaufnahme (14) aufweist und der T-Fuß (12) unterhalb der Sparrenaufnahme (14) angeordnet ist.

4. Sparrenhalter nach einem der vorangehenden Ansprüche,
**dadurch gekennzeichnet,**
**dass** die Lagerseite (8) einen Umgreifabschnitt (6) aufweist, der zur formschlüssigen Lagerung an einem Lagerprofilabschnitt (4) ausgebildet ist, wobei die T-Arme (11A, 11B) in Höhenrichtung zu dem Umgreifabschnitt (6) versetzt, insbesondere unterhalb, angeordnet sind.

5. Sparrenhalter nach Anspruch 1,
**dadurch gekennzeichnet,**
**dass** die Durchgangsbohrung (15) einen Absatz (16) und der T-Verbinder (10) an dem Absatz (16) verrastete Rastmittel (17) aufweist.

6. Sparrenhalter nach einem der vorangehenden Ansprüche,
**dadurch gekennzeichnet,**
**dass** an der Lagerseite (8) eine Aufnahme (18) für die T-Arme (11A, 11B) vorgesehen ist, insbesondere in Form eines Aufnahmeclips, in welchen die T-Arme (11A, 11B) zumindest abschnittsweise eingeclipst sind.

7. Überdachungsvorrichtung (1), insbesondere Terrassenüberdachung, mit:
einem Längsträgerprofil (2), welches zur Lagerung eines Sparrenhalters (3) ausgebildet ist und einen Lagerprofilabschnitt (4) aufweist; und
einem Sparrenhalter (3)gemäß einem der vorangehenden Ansprüche,
wobei das Längsträgerprofil (2) in Längsrichtung lokal begrenzt einen Einführabschnitt (7) aufweist, an welchem der Lagerprofilabschnitt (4) derart ausgenommen ist, dass er zur Montage an der Lagerseite (8) des Sparrenhalters (3), insbesondere in den Umgreifabschnitt (6), einführbar ist, und
wobei die Lagerseite (8) an dem Lagerprofilabschnitt (4) längsverschieblich ausgebildet ist und durch Längsverschiebung ein Formschluss zwischen dem Sparrenhalter (3) und dem Lagerprofilabschnitt (4) herstellbar ist.

8. Überdachungsvorrichtung nach Anspruch 7,
**dadurch gekennzeichnet,**
**dass** an der Befestigungsseite (8) des Sparrenhalters (3) ein Sparren (5) befestigt ist, an dessen Unterseite (19) ein mit dem T-Fuß (12) des T-Verbinders (10) kontaktierbares Leuchtmittel (20), insbesondere ein LED-Streifen mit korrespondierendem Stecker, angebracht ist.

9. Überdachungsvorrichtung nach Anspruch 7 oder 8,
**dadurch gekennzeichnet,**
**dass** in dem Längsträgerprofil, insbesondere in einem Kabelkanal des Längsträgerprofils, eine elektrische Anschlussleitung (21) verläuft, welche an der Lagerseite (8) des Sparrenhalters (3) mit einem ersten T-Arm (11A; 11B) des T-Verbinders (10) kontaktiert ist.

10. Überdachungsvorrichtung nach Anspruch 9,
**dadurch gekennzeichnet,**
**dass** die elektrische Anschlussleitung (21) ausgehend von dem zweiten T-Arm (11B) weiter in dem Längsträgerprofil (2) zum Anschluss eines weiteren Sparrenhalters (3) verläuft.

11. Verfahren zur Herstellung eines Sparrenhalters nach Anspruch 1, wobei ein elektrischer T-Verbinder (10) in eine Ausnehmung (15) im Sparrenhalter (3) eingesetzt wird, welche von einer zur Lagerung des Sparrenhalters (3) an einem Längsträgerprofil (2) ausgebildeten Lagerseite (8) zu einer zur Befestigung eines Sparrens (5) an dem Sparrenhalter (3) ausgebildeten Befestigungsseite (9) reicht.

12. Verfahren nach Anspruch 11,
**dadurch gekennzeichnet,**
**dass** die Ausnehmung (15) als Durchgangsbohrung ausgebildet ist, wobei ein T-Fuß (12) des T-Verbinders (10) von der Lagerseite (8) zu der Befestigungsseite (9) in die Durchgangsbohrung (15) eingeführt wird.

13. Verfahren nach Anspruch 12,
**dadurch gekennzeichnet,**
**dass** die Durchgangsbohrung (15) von der Befestigungsseite (9) her mit einem Absatz (16) versehen ist, so dass ein Bohrungsdurchmesser an der Befestigungsseite (9) größer als an der Lagerseite (8) ist, wobei das Einsetzen des T-Verbinders (10) ein Verrasten von an dem T-Fuß (12) angeordneten Rastmitteln des T-Verbinders (10) an dem Absatz (16) umfasst.

14. Verfahren nach einem der Ansprüche 11 bis 13,
**dadurch gekennzeichnet,**
**dass** an der Lagerseite zumindest ein Aufnahmeclip (18) zur Aufnahme von T-Armen des T-Verbinders vorgesehen ist und das Einsetzen des T-Verbinders (10) ein Einclipsen der T-Arme (11A, 11B) in den Aufnahmeclip (18) umfasst.

## Claims

1. Rafter holder (3) for a roofing device (1), in particular for terrace roofing, comprising
a mounting face (8), configured for mounting the rafter holder (3) on a longitudinal support profile (2),
a fixing face (9), configured for fixing a rafter (5) on the rafter holder (3),
**characterised by** an electrical T connector (10), configured for electrically connecting the mounting face (8) to the fixing face (9), two T arms (11A, 11B) of the T connector (10) extending along the mounting face (8) and a T foot (12) of the T connector (10) extending from the mounting face (8) to the fixing face (9), the T connector (10) being inserted into a through-hole (15) which reaches from the mounting face (8) to the fixing face (9).

2. Rafter holder according to claim 1,
**characterised**
**in that** the T foot (12) and the T arms (11A, 11B) each have a plug (13A, 13B, 13C), configured for electrically contacting plug-in connection.

3. Rafter holder according to either claim 1 or claim 2,
**characterised**
**in that** the fixing face (9) has a rafter receiver (14) and the T foot (12) is arranged below the rafter receiver (14).

4. Rafter holder according to any of the preceding claims,
**characterised**
**in that** the mounting face (8) has an enclosing portion (6), configured for positive mounting on a mounting profile portion (4), the T arms (11A, 11B) being arranged offset from, in particular below, the enclosing portion (6) in a vertical direction.

5. Rafter holder according to claim 1,
**characterised**
**in that** the through-hole (15) has a ledge (16) and the T connector (10) has latch means (17) latched onto the ledge (16) .

6. Rafter according to any of the preceding claims,
**characterised**
**in that** a receiver (18) for the T arms (11A, 11B) is provided on the mounting face (8), in particular in the form of a receiving clip into which the T arms (11A, 11B) are clipped at least in portions.

7. Roofing device (1), in particular terrace roofing, comprising:
a longitudinal support profile (2), configured for mounting a rafter holder (3) and having a mounting profile portion (4); and
a rafter holder (3) according to any of the preceding claims,
wherein the longitudinal support profile (2) has an insertion portion (7), locally delimited in the longitudinal direction, at which the mounting profile portion (4) is recessed in such a way that, for mounting on the mounting face (8) of the rafter holder (3), it can be inserted in particular into the enclosing portion (6), and wherein the mounting face (8) is configured longitudinally displaceable on the mounting profile portion (4), and a positive fit between the rafter holder (3) and the mounting profile portion (4) can be established by longitudinal displacement.

8. Roofing device according to claim 7,
**characterised**
**in that**, on the fixing face (8) of the rafter holder (3), a rafter (5) is fixed, on the lower face (19) of which a lighting means (20) contactable with the T foot (12) of the T connector (10), in particular an LED strip comprising a corresponding plug, is fixed.

9. Roofing device according to either claim 7 or claim 8,
**characterised**
**in that** an electrical connecting line (21), which is contacted on the mounting face (8) of the rafter holder (3) by a first T arm (11A; 11B) of the T connector (10), extends in the longitudinal support profile, in particular in a cable duct of the longitudinal support profile.

10. Roofing device according to claim 9,
**characterised**
**in that**, from the second T arm (11B), the electrical connecting line (21) extends further in the longitudinal support profile (2) to connect a further rafter holder (3).

11. Method for producing a rafter holder according to claim 1,
wherein
an electrical T connector (10) is inserted into a recess (15) in the rafter holder (3), said recess reaching from a mounting face (8), configured for mounting the rafter holder (3) on a longitudinal support profile (2), to a fixing face (9), configured for fixing a rafter (5) on the rafter holder (3) .

12. Method according to claim 11,
**characterised**
**in that** the recess (15) is configured as a through-hole, a T foot (12) of the T connector (10) being inserted into the through-hole (15) from the mounting face (8) to the fixing face (9).

13. Method according to claim 12,
**characterised**
**in that** the through-hole (15) is provided with a ledge (16) from the fixing face (9), in such a way that a hole diameter is greater at the fixing face (9) than at the mounting face (8), the insertion of the T connector (10) including latching latch means of the T connector (10), which are arranged on the T foot (12), onto the ledge (16).

14. Method according to any of claims 11 to 13,
**characterised**
**in that** at least one receiving clip (18) for receiving T arms of the T connector is provided on the mounting face and the insertion of the T connector (10) includes clipping the T arms (11A, 11B) into the receiving clip (18).

## Revendications

1. Support de chevron (3) pour un dispositif de toiture (1), en particulier pour un auvent de terrasse, comportant
une face de logement (8), laquelle est réalisée pour loger le support de chevron (3) au nivau d'un profil de support longitudinal (2),
une face de fixation (9), réalisée pour fixer un chevron (5) au support de chevron (3),
**caractérisé par** un connecteur électrique en T (10), lequel est réalisé pour connecter électriquement la face de logement (8) à la face de fixation (9), dans lequel deux bras de T (11A, 11B) du connecteur en T (10) s'étendent le long de la face de logement (8) et un pied de T (12) du connecteur en T (10) s'étend de la face de logement (8) à la face de fixation (9), dans lequel le connecteur en T (10) est inséré dans une perforation traversante (15) allant de la face de logement (8) à la face de fixation (9).

2. Support de chevron selon la revendication 1, **caractérisé en ce que**
le pied de T (12) et les bras de T (11A, 11B) comportent respectivement une fiche (13A, 13B, 13C) réalisée pour entrer en contact électrique dans une connexion enfichable.

3. Support de chevron selon la revendication 1 ou 2, **caractérisé en ce que**
la face de fixation (9) comporte un siège de chevron (14) et le pied de T (12) est disposé en dessous du siège de chevron (14) .

4. Support de chevron selon l'une des revendications précédentes, **caractérisé en ce que**
la face de logement (8) comporte une section d'enveloppement (6), laquelle est réalisée pour le logement par complémentarité de formes au niveau d'une section de profil de logement (4), dans lequel les bras de T (11A, 11B) sont disposés en décalage en hauteur par rapport à la section d'enveloppement (6), en particulier en dessous.

5. Support de chevron selon la revendication 1, **caractérisé en ce que**
la perforation traversante (15) comporte un épaulement (16) et le connecteur en T (10) comporte des moyesn d'encliquetage (17) s'emboîtant sur l'épaulement (16).

6. Support de chevron selon l'une des revendications précédentes, **caractérisé en ce que**
un siège (18) est prévu pour les bras de T (11A, 11B) au niveau de la face de logement (8), en particulier sous forme d'un clip de réception, les bras de T (11A, 11B) étant au moins par section enclipsés dans celui-ci.

7. Dispositif de toiture (1), en particulier auvent de terrasse, comportant :
un profil de support longitudinal (2), lequel est disposé pour le logement d'un support de chevron (3) et comporte une section de profil de logement (4) ; et
un support de chevron (3) selon l'une des revendications précédentes,
dans lequel le profil de support longitudinal (2) comporte de manière délimitée localement dans la direction longitudinale une section d'introduction (7), au niveau de laquelle la section de profil de logement (4) est évidée de telle sorte qu'elle peut être introduite, en particulier dans la section d'enveloppement (6), pour le montage au niveau de la face de logement (8) du support de chevron (3), et
dans lequel la face de logement (8) est réalisée pour être déplacée longitudinalement sur la section de profil de logement (4) et une complémentarité de formes peut être établie entre le support de chevron (3) et la section de profil de logement (4) par déplacement longitudinal.

8. Dispositif de toiture selon la revendication 7, **caractérisé en ce que**
sur la face de fixation (8) du support de chevron (3) est fixé un chevron (5), sur la face inférieure (19) duquel est agencé un moyen d'éclairage (20) pouvant entrer en contact avec le pied de T (12) du connecteur en T (10), en particulier une bande LED dotée d'une fiche correspondante.

9. Dispositif de toiture selon la revendication 7 ou 8, **caractérisé en ce que**
dans le profil de support longitudinal, en particulier dans un chemin de câble du profil de support longitudinal, s'étend une ligne de raccordement électrique (21), laquelle entre en contact avec un premier bras de T (11A ; 11B) du connecteur en T (10) sur la face de logement (8) du support de chevron (3).

10. Dispositif de toiture selon la revendication 9, **caractérisé en ce que**
la ligne de raccordement électrique (21) s'étend depuis le deuxième bras de T (11B) jusque dans le profil de support longitudinal (2) afin de raccorder un support de chevron supplémentaire (3).

11. Procédé de fabrication d'un support de chevron selon la revendication 1, dans lequel un connecteur électrique en T (10) est inséré dans un évidement (15) dans le support de chevron (3), lequel s'étend d'une face de logement (8) réalisée pour loger le support de chevron (3) au niveau d'un profil de support longitudinal (2) jusqu'à une face de fixation (9) réalisée pour fixer un chevron (5) au support de chevron (3).

12. Procédé selon la revendication 11, **caractérisé en ce que**
l'évidement (15) est réalisé comme perforation traversante, dans lequel un pied de T (12) du connecteur en T (10) est introduit dans la perforation traversante (15) de la face de logement (8) à la face de fixation (9).

13. Procédé selon la revendication 12, **caractérisé en ce que**
la perforation traversante (15) est pourvue d'un épaulement (16) depuis la face de fixation (9), de sorte qu'un diamètre de perforation sur la face de fixation (9) est plus élevé que sur la face de logement (8), dans lequel l'insertion du connecteur en T (10) comprend un emboîtement sur l'épaulement (16) de moyens d'encliquetage du connecteur en T (10) disposés sur le pied de T (12).

14. Procédé selon l'une des revendications 11 à 13, **caractérisé en ce que**
au moins un clip de réception (18) est prévu sur la face de logement afin de récevoir les bras de T du connecteur en T et l'insertion du connecteur en T (10) comprend un enclipsage des bras de T (11A, 11B) dans le clip de réception (18).
